# EUROPEAN PATENT SPECIFICATION

(11) **EP 3 122 530 B1**
(45) Date of publication and mention of the grant of the patent: **15.01.2020**
(21) Application number: 15712861.2
(22) Date of filing: 23.03.2015
(51) Int. Cl.: B29C 44/12, B29C 44/34, B29C 33/10

(54) **APPARATUS AND METHOD FOR MANUFACTURING PANELS MADE OF EXPANDED PLASTIC MATERIAL**
VORRICHTUNG UND VERFAHREN ZUR HERSTELLUNG VON PLATTEN AUS SCHAUMKUNSTSTOFFMATERIALIEN
APPAREIL ET PROCÉDÉ DE FABRICATION DE PANNEAUX CONSTITUÉS DE MATÉRIAU PLASTIQUE EXPANSÉ

(30) Priority: 27.03.2014 IT VR20140076
(43) Date of publication of application: 01.02.2017
(73) Proprietor: MANNI S.R.L., 46031 Bagnolo San Vito (IT)
(72) Inventor: MANNI, Giuseppe, I-46031 Bagnolo San Vito (IT)
(74) Representative: Modiano, Micaela Nadia
(86) International application number: PCT/EP2015/056130
(87) International publication number: WO 2015/144641

(56) References cited:
- EP-A1- 0 854 025
- WO-A1-98/26915
- FR-A1- 2 205 405
- US-A- 3 878 279

## Description

The present invention relates to an apparatus and a method for manufacturing panels made of expanded plastic material.

As is known, apparatuses are currently available for the batch production of panels made of expanded plastic foam material, in particular polyurethane, for thermal insulation.

Such apparatuses are constituted, generally, by a press that comprises a pair of pressing surfaces, which are mutually facing and can move toward each other, in order to delimit, in cooperation with at least one perimetric confinement frame, which is interposed between the pressing surfaces, at least one expansion cavity into which is injected, by way of an injection head passing through an adapted opening defined in the perimetric confinement frame, a reactive mixture that is designed to expand in the expansion cavity.

Another prior art apparatus and method is disclosed in US3878279.

In particular, in the apparatuses of the conventional type the injection of the expanding mixture occurs in the presence of air inside the expansion chamber.

A problem suffered by traditional apparatuses consists in that, in order to ensure that the expansion cavity is correctly filled by the expanding mixture, without the formation of bubbles or the presence of unfoamed parts, they require the injection into the expansion cavity of a greater quantity of expanding mixture than the quantity that is theoretically necessary, with an evident increase in costs.

Another problem that is found with traditional apparatuses is the difficulty of giving the finished panel a density that is substantially homogeneous, in addition to requiring a pressing time, i.e. the time that the panel being formed stays in the press, which is rather long in order to prevent unwanted deformations of the panel, once this is extracted from the press.

In order to overcome these drawbacks, apparatuses have been introduced for the vacuum foaming of the panels, which make it possible to obtain an at least partial vacuum in the expansion cavity during the injection of the expanding mixture into it.

Apparatuses of this type have, in the pressing surfaces, air suction holes, which are made when making the press and which are connected to a vacuum pump, usually of the type with vanes in an oil bath, by way of a suction circuit constituted by air passage ducts, which are also made when making the press in the pressing surfaces.

Since the vacuum pump used always tends to reach vacuum levels that are too high with respect to the necessary level, the current apparatuses for vacuum foaming also require the presence of a proportional valve for vacuum control whose purpose is to open a controlled leak in the suction circuit, in order to obtain the desired level of vacuum in the expansion cavity.

Usually, in order to prevent the expanding mixture from covering the air suction holes, within the perimetric confinement frame there are dividers or internal frame segments, which separate the expansion cavity proper from subchambers which are directly connected to the air suction holes that are defined in the pressing surfaces. Such internal frame segments have, in turn, through holes that connect each subchamber to the expansion cavity into which the expanding mixture is injected, and which are covered by a sponge that allows the passage of air but not of the expanding mixture.

Along one side of the perimetric frame there is further a hole for the passage of the injection head of the expanding mixture, which is provided with a device that enables the insertion and extraction of the injection head without causing vacuum leaks. Such device is constituted by a slideable scuttle, which is moved hydraulically by an adapted actuator and must be integrated with the perimetric confinement frame.

Current apparatuses for vacuum foaming suffer some application limitations which have a negative influence on their adoption and use.

Firstly, the press must already have been adapted, when it was made, with some elements that make it possible to create the vacuum in the expansion cavity, i.e. the air suction holes in the pressing surfaces and the air passage ducts that enable the connection of such suction holes with the vacuum pump.

Secondly, owing to the presence of the air suction holes in the pressing surfaces, the latter cannot be used over all of their superficial area to create the expansion cavity, since the use of the internal frame segments to delimit the area in which the suction holes are arranged substantially entails a reduction of the space that is effectively available for the formation of the panels.

Furthermore, the device that controls the passage hole of the injection head is rather complicated and expensive and also requires a dedicated electrical control.

And if pentane is used as the expanding agent mixed with polyurethane, the vacuum pump requires special contrivances that make it very expensive.

To this must also be added the fact that control of the vacuum is not optimized from the energy viewpoint, in that a vacuum pump is used which operates in a suction circuit in which a proportional vacuum control valve has to keep a controlled leak open in order to ensure the desired level of vacuum.

The aim of the present invention is to provide an apparatus for manufacturing panels made of expanded plastic material which is capable of overcoming the above mentioned drawbacks of the stat of the art, by making it possible to execute a vacuum foaming of the panels without requiring complex structural characteristics of the press.

An object of the present invention is to provide a method for manufacturing panels made of expanded plastic material which makes it possible to produce the panels with simple manufacturing steps.

Another object is to make available a method that makes it possible to very simply execute the vacuum manufacturing of panels, even using existing presses that are not adapted for this purpose.

Another object is to provide a kit that makes it possible to easily adapt to the vacuum manufacturing of panels existing presses that were not adapted when they were made for this type of production.

This aim and these and other objects which will become better apparent hereinafter are achieved by the apparatus, according to the invention, as defined in claim 1.

Further characteristics and advantages of the invention will become better apparent from the description of a preferred, but not exclusive, embodiment of the apparatus, according to the invention, which is illustrated by way of non-limiting example in the accompanying drawings wherein:
Figure 1 is a schematic, cross-sectional view of a press fitted with the apparatus according to the invention;
Figure 2 is a plan view from above of a perimetric frame of the apparatus according to the invention;
Figure 3 is a detail of the apparatus according to the invention with the press in the open condition;
Figure 4 is the detail in Figure 3 with the press in the closed condition;

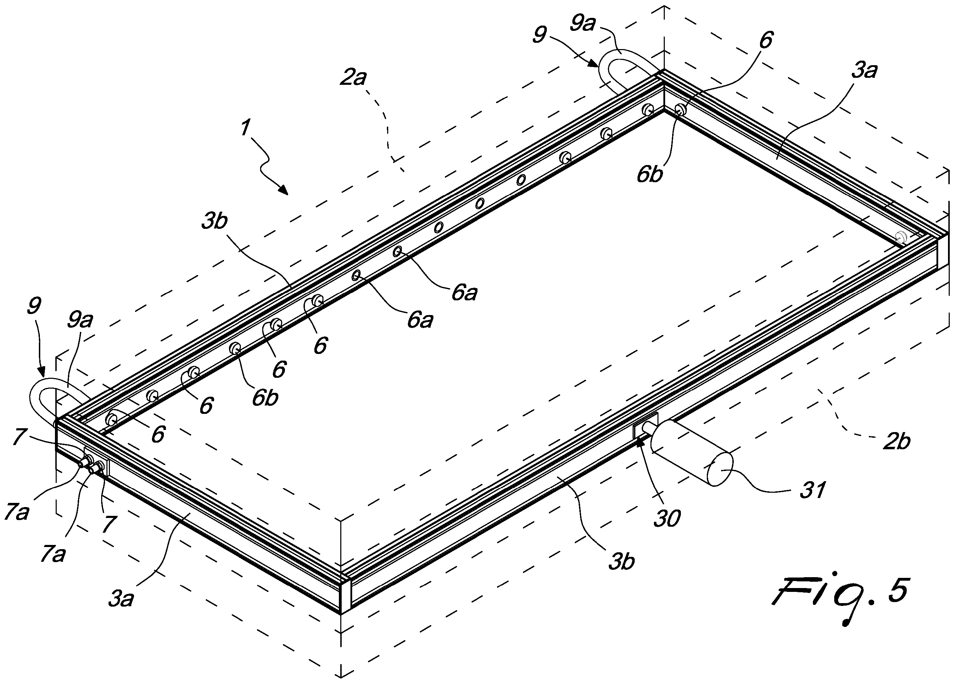

Figure 5 is a perspective view of the perimetric frame;

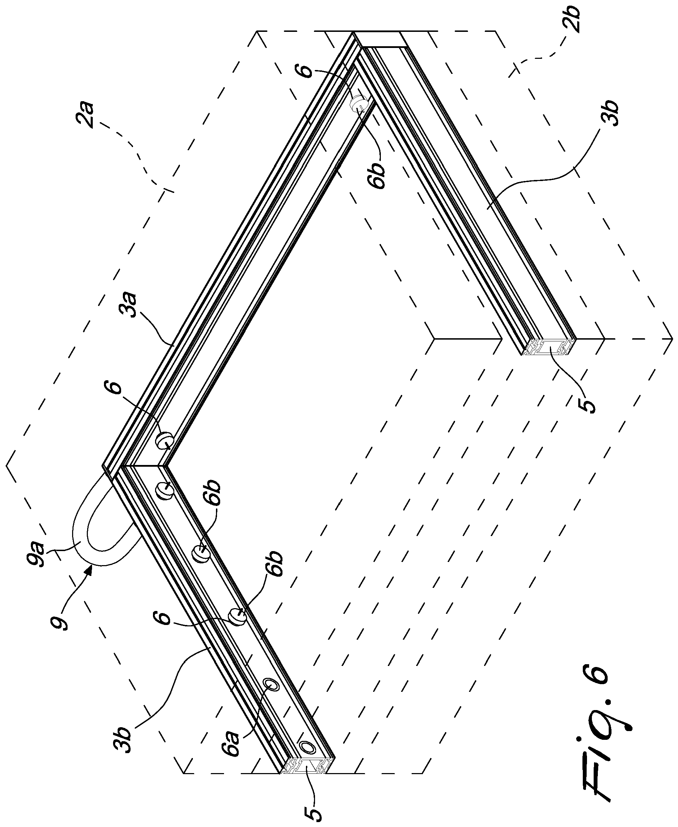

Figure 6 is a cutaway perspective view of the perimetric frame in Figure 5;
Figures 7, 8, 9, 10 are cross-sectional views of various types of profiled elements that can be used to provide the perimetric frame of the apparatus according to the invention;
Figure 11 shows, in a first embodiment, a seal device associated with an injection opening of the expanding mixture, in a condition in which a head for injecting the expanding mixture is decoupled from the injection opening;
Figure 12 shows the seal device in Figure 11 with the injection head coupled to the injection opening;
Figure 13 shows a second embodiment of the seal device with the injection head of the mixture decoupled from a stopper device for the injection opening;
Figure 14 shows the embodiment in Figure 13 with the injection head coupled to the stopper device.

With reference to the figures, the apparatus for manufacturing panels made of expanded plastic material, according to the invention, which is generally designated with the reference numeral 1, comprises a press 2, which has, on a supporting frame, at least one pair of pressing surfaces 2a and 2b, which are mutually facing and can move toward or away from each other, so as to be able to pass from an open press condition to a closed press condition or vice versa.

More specifically, the pressing surfaces 2a, 2b are superimposed on each other and, for example, the pressing surface arranged above, which in the figures is the one designated with 2a, is fixed to the supporting frame of the press 2, while the pressing surface arranged below, designated in the figures with 2b, can be actuated for translational motion along a substantially vertical direction by way of hydraulic cylinders, not shown.

Between the pressing surfaces 2a and 2b at least one perimetric confinement frame 3 is positioned, which is intended to be clamped between the pressing surfaces 2a and 2b, in order to delimit laterally at least one expansion cavity 4 into which an expanding mixture is injected in order to provide one or more panels.

According to the invention, at least one portion of the perimetric frame 3 defines internally, along its extension, at least one air passage channel 5 that is connected to at least one air intake port 6, which is defined in the surface of the perimetric frame 3 that is directed toward the inside of the expansion cavity 4, and to at least one connection port 7, which is instead defined in the surface of the perimetric frame 3 that is directed toward the outside of the expansion cavity 4 and is adapted to be connected to at least one air suction device 8.

By way of the perimetric frame 3 it is thus possible to execute the suction of air from the expansion cavity 4, thus obtaining the possibility of creating the at least partial vacuum inside the expansion cavity 4 in which the panels are formed, without requiring the construction of complex air passage circuits through the pressing surfaces 2a and 2b or the arrangement of open air suction holes on the surfaces of the pressing surfaces proper, as in the known art.

Conveniently, as a function of the air flow required in order to obtain the degree of vacuum desired inside the expansion cavity 4 and of the dimensions of the panels to be manufactured, multiple connection ports 7 and multiple air intake ports 6 can be provided in the perimetric frame 3.

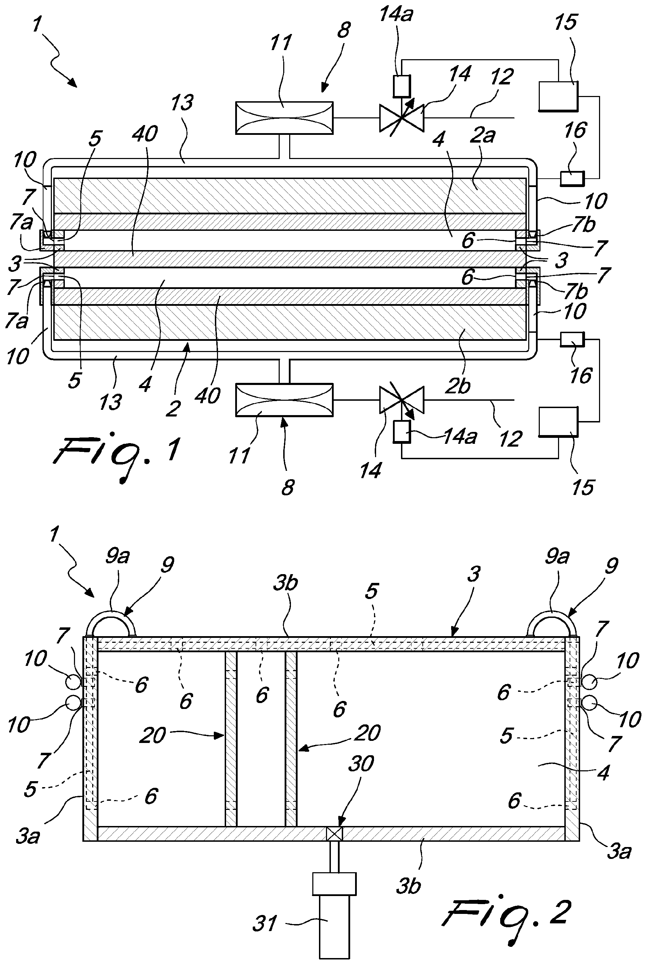

Optionally, as shown in Figure 1, between the pressing surfaces 2a and 2b there can even be two or more perimetric frames 3 arranged, each one of which makes it possible to create at least one respective expansion chamber 4, so as to be able to increase the number of panels manufactured in each work cycle of the press 2.

Advantageously, it is likewise possible to arrange things, as is known per se, so that each perimetric frame 3 can be placed on a respective carriage 40, which can move, substantially horizontally, between a withdrawn position, in which it is arranged outside the pressing surfaces 2a and 2b of the press, in order to allow the operators to extract the panels formed inside the corresponding perimetric frame 3 and to arrange the perimetric frame 3 on the carriage for each new work cycle, and an extended position, in which it is interposed between the pressing surfaces 2a and 2b, in order to allow the manufacture of panels.

For the sake of simplicity, since the perimetric frames that are optionally present can have the same characteristics, hereinafter only one perimetric frame 3 will be described in detail.

Advantageously, each connection port 7 is provided with at least one respective rapid connection element 7a that makes it possible to couple it to the air suction device 8. In particular, each rapid connection element 7a defines, for example, a female seat 7b that can be detachably mated with a corresponding coupling element 10 that is connected to the air suction device 8.

The connection or disconnection of the connection ports 7 with the air suction device 8 by way of their rapid connection elements 7a can be done manually by an operator.

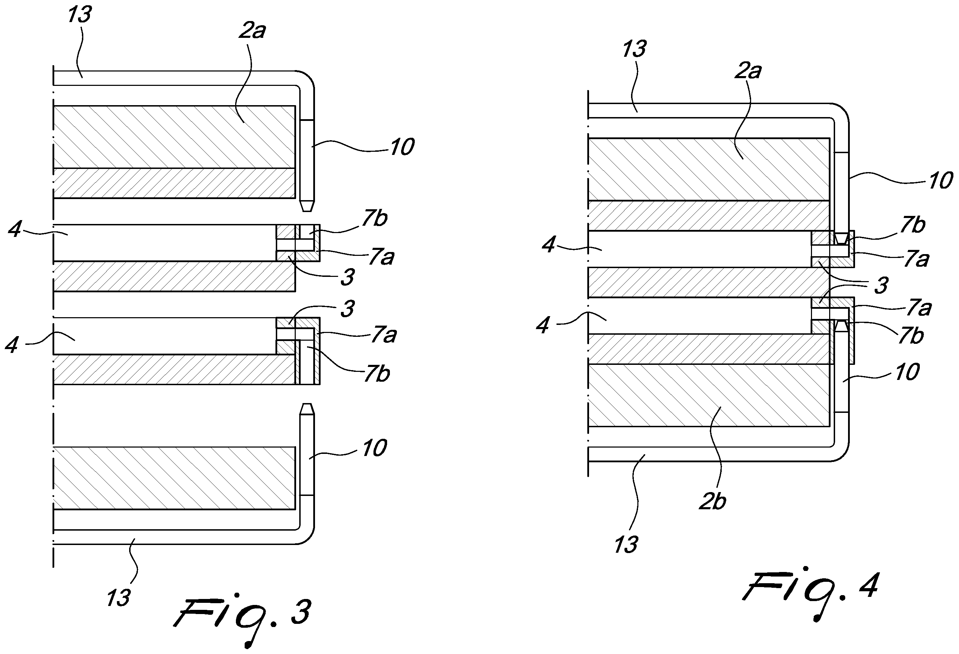

Alternatively, as shown in Figures 3 and 4, it is also possible that the connection and disconnection of the connection ports 7 with the air suction device 8 can occur automatically upon the closing and the opening respectively of the press 2.

In this case, the coupling elements 10 are integral with the pressing surfaces 2a and 2b and the female seats 7b of the rapid connection elements 7a of the connection ports 7 are directed toward a respective coupling element 10. In this manner, when the pressing surfaces 2a, 2b are mutually brought together in order to clamp the perimetric frames 3 between them, the coupling elements 10 can mate with the rapid connection elements 7a, while, when the pressing surfaces 2a, 2b are mutually pulled apart, the coupling elements 10 can, in turn, detach from the respective rapid connection elements 7a.

Advantageously, the air passage channel 5 defined inside the perimetric frame 3 extends longitudinally along at least two contiguous sides of the perimetric frame. However, there is no reason why the perimetric channel 5 cannot extend inside only one side of the perimetric frame 3 or, optionally, two mutually non-contiguous sides of the perimetric frame 3.

Conveniently, the portions of the air passage channel 5 which are defined in contiguous sides of the perimetric frame 3 are mutually connected by way of connection means 9 that are arranged, advantageously, outside the perimetric frame 3 and can be provided, for example, by at least one flexible tube 9a.

More specifically, the perimetric frame 3 has, preferably, a pair of head sides 3a and a pair of longitudinal sides 3b which are longer than the head sides 3a.

Conveniently, the connection ports 7 are defined at at least one of the head sides 3a, while the air intake ports 6 can be defined on at least one of the head sides 3a and/or at at least one of the longitudinal sides 3b.

More specifically, along at least one of the longitudinal sides 3b there is a plurality of intake ports 6 that are mutually spaced apart, which can, optionally, be selectively occluded, according to manufacturing requirements, by way of respective removable caps 6a.

In order to prevent the inflow of the expanding mixture into the intake ports 6, the latter are conveniently covered by sponge bodies 6b that allow the passage of air but not of the expanding mixture.

Advantageously, the suction device 8 comprises a Venturi pump 11, which has the advantage of having no moving parts, therefore being intrinsically safe in the event that potentially explosive expanding agents are used, such as for example pentane.

In particular, the Venturi pump 11 is supplied by a compressed air line 12 and is connected to the connection ports 7 by way of one or more suction ducts 13.

Conveniently, interposed on the compressed air line 12 is a proportional valve 14 for controlling the flow of compressed air supplied to the Venturi pump 11, which, by varying the flow-rate of compressed air sent to the Venturi pump 11, makes it possible to vary the flow of air sucked by the Venturi pump 11 through the suction ducts 13, so as to make it possible to reach the desired level of vacuum in the expansion cavity 4.

Conveniently, the proportional control valve 14 is controlled by an actuator 14a driven by a control unit 15, for example of the type with PLC, which is functionally connected to at least one pressure sensor 16 that is positioned, advantageously, along a respective suction duct 13, so as to be able to detect the pressure value that is present in the suction duct 13 and is present, therefore, in the expansion cavity 4 as well.

Advantageously, the perimetric frame 3 is, at least partially, provided by way of a plurality of profiled elements 18 that are assembled together, so as to define various sides of the perimetric frame 3.

Conveniently, the profiled elements 18 can be of various types according to the parts of the perimetric frame 3 that they are intended to define.

In more detail, each profiled element 18, or at least one set of them, is axially hollow so as to define a respective portion of the air passage channel 5.

In at least one of the profiled elements 18 there is at least one connection port 7 and at least one of the profiled elements 18 is provided with at least one intake port 6, so that by way of the assembly of the profiled elements 18 it is possible to obtain a perimetric frame 3 that is at least complete with air passage channel 5, at least one connection port 7 and at least one intake port 6.

It should be noted that, on a same profiled element 18, there may be one or more connection ports 7 and also one or more intake ports 6, or there may be only the connection ports 7 or only the intake ports 6.

For example, profiled elements 18 provided with connection ports 7 can be used to provide the head sides 3b of the perimetric frame 3, while profiled elements 18 with only the intake ports 6 defined can be used to provide the longitudinal sides 3b of the perimetric frame 3. In any case, there is no reason why profiled elements 18 that are provided both with one or more intake ports 6 and with one or more connection ports 7 cannot be used to provide at least one of the longitudinal sides of the perimetric frame 3.

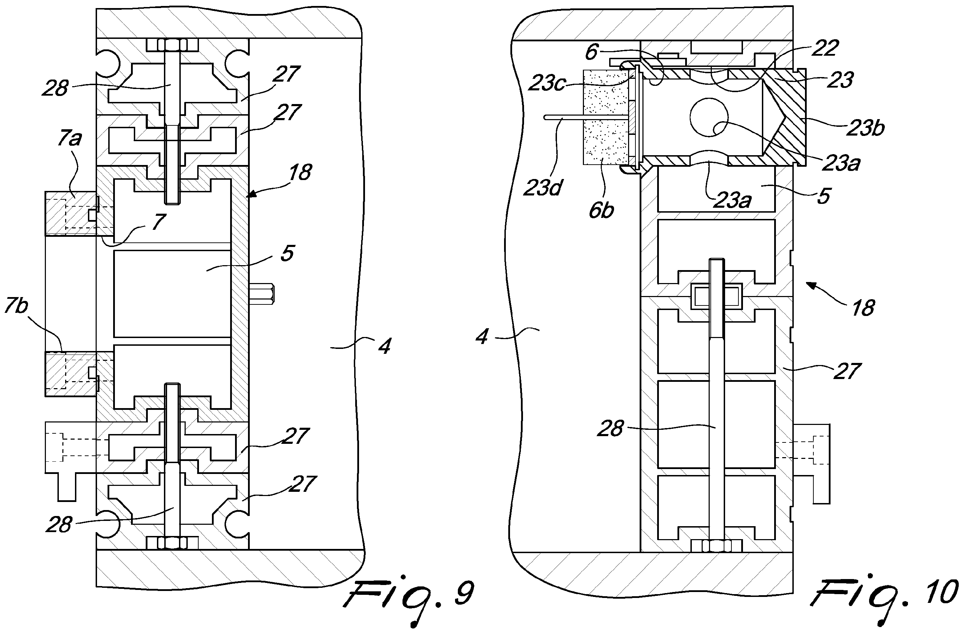

Conveniently, as shown in Figure 10, the intake ports 6 can be obtained on the profiled elements 18 by providing, transversely with respect to the extension of the profiled elements 18, through holes 22, in which bushings 23 are axially accommodated which are provided, on their side wall, with openings 23a for connection to the portion of passage channel 5 that is defined by the inner cavity of the profiled element 18 in which they are inserted, and which are open at the end thereof that is intended to be directed toward the inside of the expansion cavity 4 and are closed, at the opposite end, by a closing end wall 23b.

At the open end of the bushings 23, a perforated disk 23c can be conveniently positioned which engages, with its peripheral region, an annular groove defined on the inner surface of the corresponding bushing 23, and which supports, optionally, an axial bar 23d for supporting a sponge body 6b, which is arranged so as to cover the intake port 6 that is defined by the bushing 23.

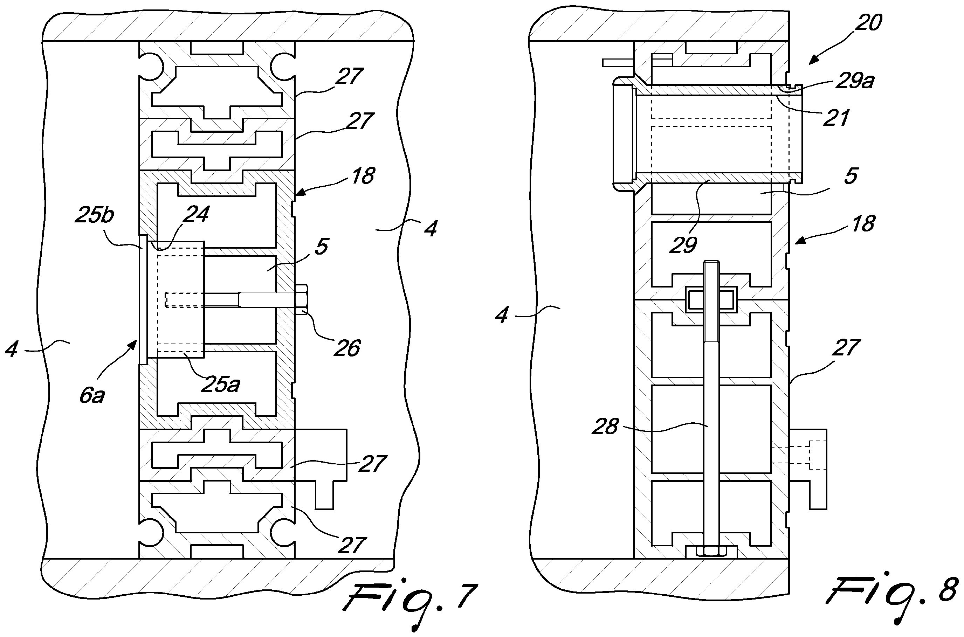

Alternatively, as shown in Figure 7, in particular for profiled elements 18 that are used to provide the longitudinal sides of the perimetric frame 3, the intake ports 6 can be provided by dead holes 24, which are open in the wall of the corresponding profiled element 18 that is intended to be directed toward the inside of the expansion cavity 4 and are obtained, for example, by milling.

If it is desired to keep some intake ports 6 closed, removable caps 6a can be accommodated in the corresponding dead holes 24, and can have, for example, an insertion body 25a that can be introduced into the corresponding dead hole 24 and an abutment head 25b that is designed to rest against the edge of the dead hole.

Advantageously, the removable caps 6a can be kept locked and sealed in the position of engagement in the corresponding dead hole 24 by way of a screw 26 that can be inserted in the profiled element 18 from its wall that lies opposite with respect to the wall in which the dead hole 24 is present.

Conveniently, the overall height of the various profiled elements 18 can be varied, according to requirements and to the thickness of the panels to be manufactured, by coupling to their main body one or more additional profiled bodies 27, by way of interlocking or by way of threaded elements 28.

It should be noted that inside the perimetric frame 3 one or more internal frame segments 20 can be positioned, the function of which is to constitute side banks which make it possible to delimit, inside the expansion cavity 4, compartments for the formation of multiple panels in the same expansion cavity 4 or, in any case, of panels that are smaller than the expansion cavity 4.

In particular, as illustrated in Figure 2, the internal frame segments 20 have an elongated extension and are arranged substantially parallel to the head sides 3a of the perimetric frame 3, in a position that can be varied, along the extension of the longitudinal sides 3b of the perimetric frame, according to the desired dimensions of the panels to be manufactured.

Conveniently, the internal frame segments 20 are each passed through by one or more through ports 21 which enable the passage of air. The through ports 21 can be optionally covered by sponge bodies in order to prevent them from becoming clogged by the expanding mixture.

The internal frame segments 20 are also conveniently provided by way of respective profiled elements 18.

In this case, as shown in Figure 8, the through ports 21 can, for example, be provided using the bushings 29 that are open at both ends, which are accommodated in respective reception holes 29a, passing through the profiled element that provides the corresponding internal frame segment 20.

Conveniently, along the perimetric frame 3 there is at least one portion of injection 30 of the expanding mixture, in which is defined at least one injection opening 30a that allows the introduction of the expanding mixture into the expansion cavity 4 by way of an injection head 31 of the expanding mixture which is insertable in the injection opening.

The injection portion 30 can be advantageously provided by a body associated with an adapted profiled element and in which a passage hole is defined that provides the injection opening 30a and which can, optionally, accommodate a bushing 30b that defines the inner walls of the injection opening 30a.

Advantageously, associated with the injection opening 30a is a seal device of the vacuum generated inside the expansion cavity 4.

Conveniently, the seal device comprises means for closing the injection opening 30a which are openable by pushing.

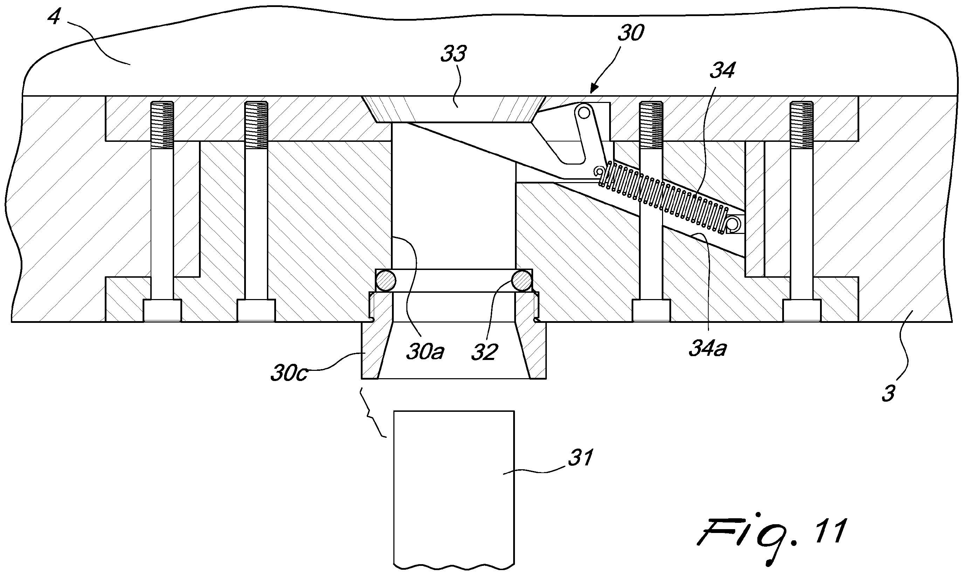

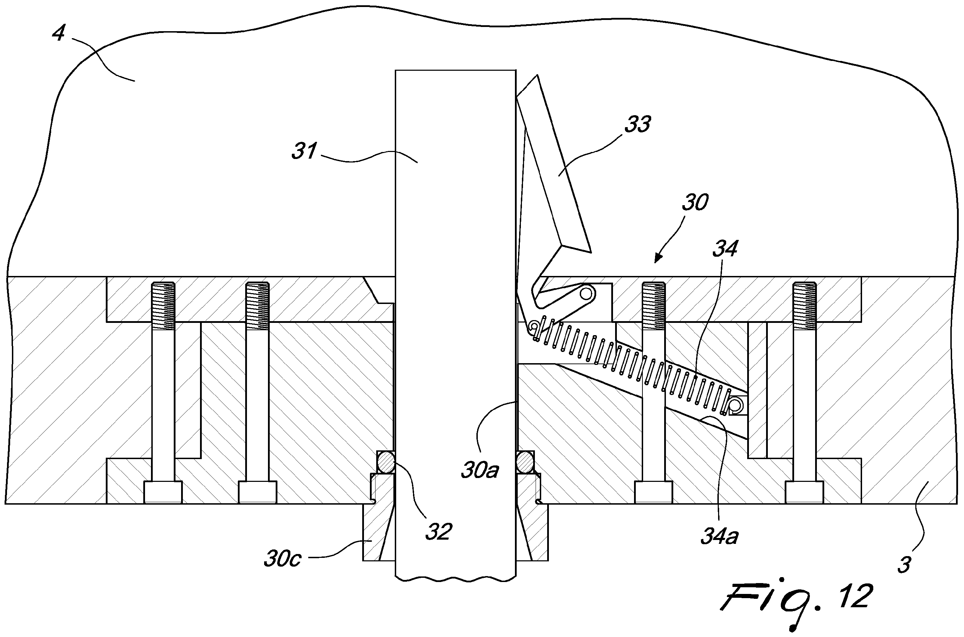

More specifically, according to a first embodiment shown in Figures 11 and 12, the seal device comprises an adapted annular gasket 32, which is accommodated in the injection opening 30a and can be engaged by the injection head 31 when the latter is inserted axially in the injection opening 30a, and has a scuttle 33 that closes the injection opening 30a and which can be opened automatically by way of the thrust exerted thereon by the injection head 31 upon its insertion through the injection opening 30a.

More specifically, the scuttle 33 is arranged at the end of the injection opening 30a that is directed toward the expansion cavity 4 and it is hinged laterally to the injection opening 30a, in order to be able to pass, under the thrust exerted upon it by the injection head 31 during its insertion in the injection opening 30a, from a closed position, shown in Figure 11, to an open position, shown in Figure 12, in contrast with elastic means of return 34, which are constituted by a spring accommodated in a seat 34a, which is inclined with respect to the axis of the injection opening 30a and provided in the body of the injection portion 30.

At the opposite end of the injection opening 30a with respect to the end in which the scuttle 33 is present, there can be a guiding body 30c that has flared walls that are adapted to facilitate the insertion of the injection head 31 in the injection opening 30a.

Conveniently, the scuttle 33, in the closed position, engages, with its peripheral portion, the edge of the injection opening 30a and magnetic means are provided for retaining the scuttle 33, which are, for example, constituted by a magnet associated with the scuttle 33 and capable of interacting with the ferromagnetic material that constitutes the body of the injection portion 30 for the purpose of keeping the scuttle 33 closed against the edge of the injection opening 30a, so as to ensure a valid seal of the vacuum in the expansion cavity 4, when the scuttle 33 is in the closed position.

With this arrangement, the opening of the scuttle 33 can occur following a thrust exerted on the scuttle 33 by the injection head 31 which is capable of defeating both the magnetic force of attraction exerted by the magnetic retaining means and also the elastic reaction force exerted by the elastic means of return 34 on the scuttle.

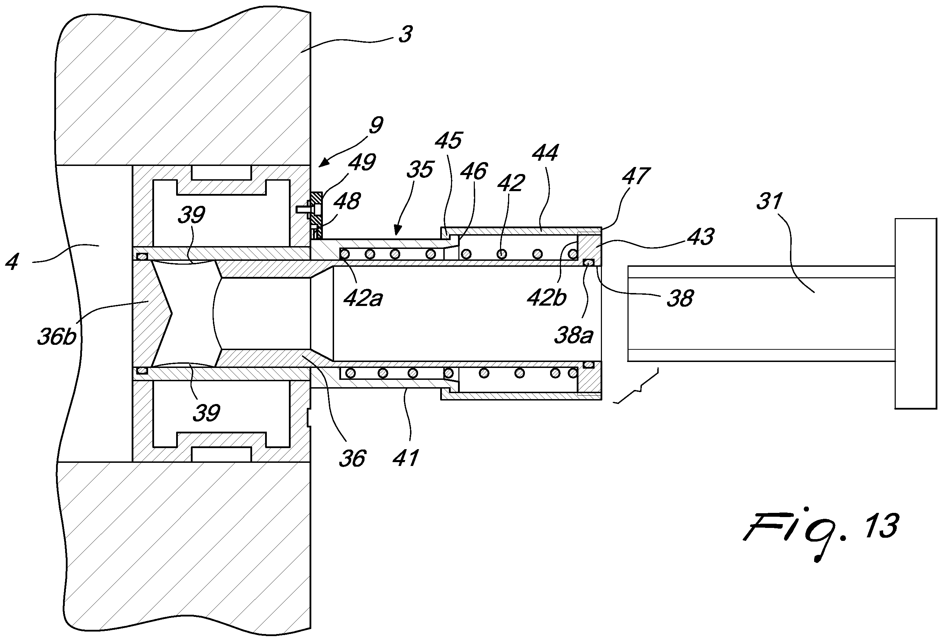

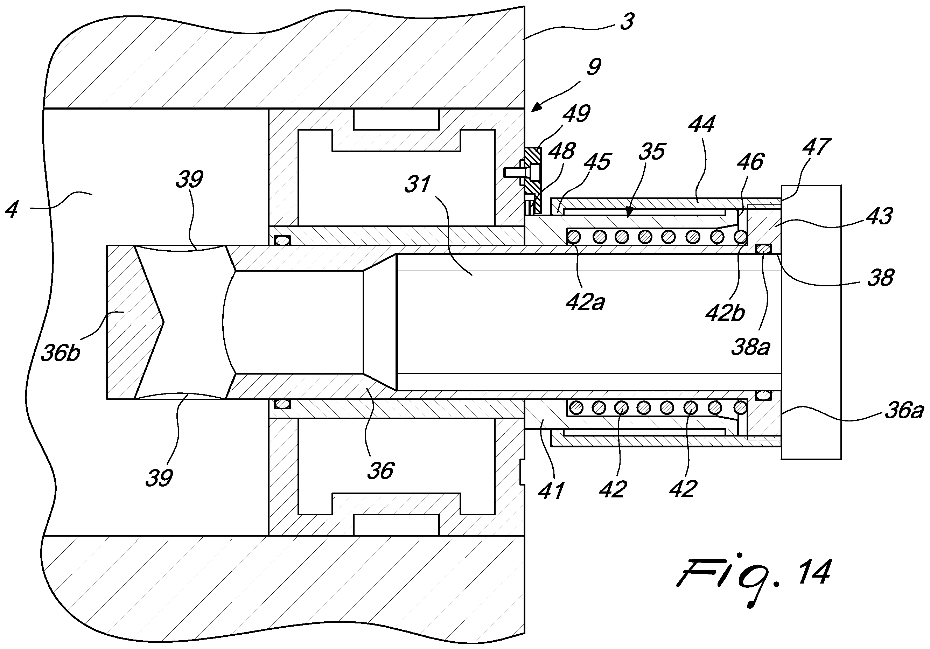

According to a different embodiment, which is shown in Figures 13 and 14, the means for closing the injection opening 30a comprise a stopper device 35 which is provided with a slider shank 36 that is connected to elastic return means.

In particular, the slider shank 36 axially defines a passage 37 for the expanding mixture, which has, at a first end 36a of the slider shank 36 which is intended to be directed toward the outside of the expansion cavity 4, an inlet opening 38, within which is hermetically insertable, thanks to the presence of an annular gasket 38a, the injection head 31 of the expanding mixture.

Substantially at a second end 36b of the slider shank 36 which is intended to be inserted in the expansion cavity 4, the passage 37 has one or more outlet openings 39, which are defined, for example, in the lateral surface of the slider shank 36.

More specifically, the slider shank 36 is accommodated in the injection opening 30a with the ability to slide axially along such injection opening, in order to pass from a closed position, shown in Figure 13, in which its second end 36b is arranged inside the injection opening 30a, so that the outlet openings 39 are closed, to an open position, shown in Figure 14, in which the second end 36b of the slider shank 36 is extended from the injection opening 30a in order to be introduced into the expansion cavity 4.

Advantageously, on the inner wall of the injection opening 30a there is a sealing gasket 40 that can be engaged by the slider shank 36.

Furthermore, fitted around the slider shank 36 is a sealing body 41, conveniently substantially cylindrical in shape, which defines an annular abutment surface 41a that is designed to rest against the edge of the injection opening 30a that faces the outside of the expansion cavity 4.

The aforementioned elastic return means are conveniently constituted by a spring 42 mounted around the slider shank 36 between a first abutment wall 42a, which is defined on the sealing body 41, and a second abutment wall 42b, which is integral with the slider shank 36 and is defined, for example, by a flange 43, arranged on the outer surface of the slider shank 36 substantially at its first end 36a.

Arranged around the slider shank 36 and around the sealing body 41 is a sleeve 44, integral with the slider shank 36, which defines a stop tooth 45 that can be engaged by a stop ridge 46, which is defined on the outer surface of the sealing body 41.

In particular, the sleeve 44 is, for example, screwed, by way of a female thread defined on its inner surface, to a threaded portion 47 that is provided at the flange 43 of the slider shank 36.

Conveniently, the sealing body 41 is lockable to the perimetric frame 3 by way of a locking tooth 48 that is provided on its outer surface and is insertable, following a rotation of the sealing body 41 about its own axis, between a pair of axial shoulders, which are defined, for example, respectively by the surface of the perimetric frame 3 which is directed toward the outside of the expansion cavity 4 and by a locking plate 49 that is fixed to such surface of the perimetric frame 3, laterally to the injection opening 30a.

Use of the stopper device 35 described is the following. With the slider shank 36 in the closed position, the injection head 31 is inserted in the passage 37 and is pushed in the direction of the expansion chamber 4, so as to cause the sliding of the slider shank 36, until it is brought to its open position.

Under the thrust of the spring 42, the sealing body 41 is kept resting against the edge of the injection opening 30a so as to ensure the perfect vacuum seal.

Once the injection head 31 has been disconnected from the passage 37, the slider shank 36 will return to the closed position by way of the thrust exerted thereon by the spring 42.

The advantage of this solution consists in that, in the event of a change of production, and therefore of perimetric frames, it is possible to simply remove the stopper device 35 from the injection opening 30a and mount it on the new perimetric frame that will be used, without requiring complicated dismantling operations.

The method for manufacturing panels made of expanded plastic material according to the invention includes the following steps.

In order to laterally delimit an expansion cavity 4 for the expanding mixture, at least one perimetric frame 3 is prepared, with at least one air passage channel 5 defined within at least one portion thereof and connected to one or more intake ports 6 that are arranged in the surface of the perimetric frame 3 which is intended to be directed toward the expansion cavity 4, and with one or more connection ports 7, which are defined in the surface of the perimetric frame 3 which is directed toward the outside of the expansion cavity 4.

In particular, the perimetric frame 3 is prepared by assembling various profiled elements 18 together, so as to provide the different sides of the perimetric frame 3.

For example, at least one profiled element 18 provided with connection ports 7 and, optionally, with one or more intake ports 6 can be used in order to provide at least one of the head sides 3a of the perimetric frame 3.

At least one of the longitudinal sides 3b of the perimetric frame 3 can, on the other hand, be provided by way of at least one profiled element 18 that is provided with one or more intake ports 6.

Some of the available intake ports 6 can optionally be occluded by way of respective removable caps 6a, according to the production requirements of the panels.

By way of the flexible tubes 9a, the operator proceeds, furthermore, to mutually connect the portions of the passage channel 5 which are defined along the head sides 3a of the perimetric frame 3 with the portions of the passage channel 5 which are defined along the longitudinal sides 3b of the perimetric frame.

In particular, each flexible tube 9a is connected, at one of its ends, to a perforated plate that closes off an end of the profiled element 18 which defines a head side 3a of the perimetric frame 3 and, at its other end, it is connected to a connection opening that is provided on the external wall of a profiled element 18 that defines the contiguous longitudinal side of the perimetric frame 3.

Optionally, depending on the number and size of the panels to be manufactured, one or more internal frame segments 20 can also be positioned within the perimetric frame 3.

Then the perimetric frame 3 is arranged between the pressing surfaces 2a and 2b of a press 2, which are subsequently put in motion so that they move toward each other, so as to obtain the clamping of the perimetric frame 3 between the pressing surfaces 2a and 2b.

Then the connection ports 7 in the perimetric frame 3 are connected to at least one air suction device 8.

Such connection can be done manually by an operator who inserts the coupling elements 10 that are connected to the air suction device 8 in the female seat 7b of the rapid connection elements 7a that are associated with the connection ports 7 or, alternatively, it can occur automatically upon the closing of the press, as explained previously.

At this point, the air suction device 8 is activated and, in particular, the operator acts on the proportional control valve 14 so that the compressed air line 12 can supply power to the Venturi pump 11 with an adapted flow-rate.

The air present in the expansion cavity 4 is thus channeled through the intake ports 6 along the passage channel 5 that is present within the perimetric frame 3 and from this it is sucked by the Venturi pump 11 through the connection ports 7 and the suction ducts 13, until the level of vacuum required in the expansion cavity 4 is reached.

Once the required level of vacuum has been reached, the expanding mixture is injected into the expansion cavity 4 by inserting the injection head 31 in the injection opening 30a defined in the perimetric frame 3.

The expanding mixture is then left to expand while keeping the air suction device 8 activated, so that the expanding mixture can completely fill the expansion cavity 4 under the action of the vacuum.

The control unit 15, as a function of the signal that arrives from the pressure sensor 16, automatically controls the proportional control valve 14 so as to allow the Venturi pump 11 to compensate the increase in pressure caused by the increase in volume of the expanding mixture in the expansion chamber 4, in this way maintaining the preset vacuum level inside the expansion cavity 4.

Once the necessary time has elapsed for the solidification of the expanding mixture, the press 2 is opened by moving the pressing surfaces 2a and 2b apart in order to make it possible to extract the panel or panels formed inside the perimetric frame 3.

Thanks to the peculiar structural arrangement of the perimetric frame 3, a method of modifying existing presses is also made available which makes it possible to adapt to the vacuum manufacturing of panels made of expanded plastic material any existing press that was not adapted for this type of production when it was made and which is, usually, defined by a pair of pressing surfaces between which one or more confinement frames can be clamped.

Such modification method consists, in essence, in substituting at least one of the containment frames supplied with the existing press with a perimetric frame 3 and in connecting the connection ports 7 that are present in the perimetric frame 3 to at least one air suction device 8.

In fact by arranging the perimetric frame 3 between the pressing surfaces of the existing press and connecting, by way of its connection ports 7, the air passage channel 5 that extends inside it to the suction device 8, it is possible to evacuate, through its intake ports 6, the air present in the expansion cavity 4 that is delimited thereby, thus obtaining a level of vacuum that makes it possible to carry out the vacuum manufacturing of the panels, although starting from an existing press that was originally not equipped for this type of production.

According to another aspect of the invention, in addition to the above-mentioned method, a kit is also provided which makes it possible to adapt an existing press to the vacuum manufacturing of panels made of expanded material.

Such kit is comprised of: at least one perimetric confinement frame 3, provided with at least one air passage channel 5 which extends inside at least one portion thereof and is connected to one or more intake ports 6, which are defined in its inner surface, and with at least one or more connection ports 7, which are defined in its outer surface; as well as with at least one air suction device 8 that is intended to be connected to the connection ports 7 of the perimetric frame 3.

Conveniently, the kit according to the invention comprises, furthermore, the connection means 9 that make possible the mutual connection of the portions of the passage channel 5 that are defined in mutually contiguous sides of the perimetric frame 3.

More specifically, the kit avails of a plurality of profiled elements 18 that axially define at least one respective portion of the passage channel 5 and which can be variously mutually assembled in order to provide various sides of the perimetric frame 3, depending on the desired dimensions for the perimetric frame 3.

Preferably, the profiled elements 18 can be of different types so as to make possible a vast range of different combinations and, in particular, there can be different sets of profiled elements 18 in order to provide the different parts of the perimetric frame 3.

For example, the profiled elements 18 can, conveniently, comprise at least one profiled element 18 of a first type which is intended to provide, at least partially, at least one of the head sides 3a of the perimetric frame 3 and at least one profiled element 18 of a second type which is intended to provide, at least partially, at least one of the longitudinal sides 3b of the perimetric frame 3.

The profiled elements 18 of the first type have at least one connection port 7 and, optionally, also one or more intake ports 6. The profiled elements of the second type have one or more intake ports 6.

Advantageously, at least one profiled element 18 of a third type is likewise provided which makes it possible to provide the injection portion 30 of the expanding mixture and is provided, to this end, with one or more injection openings 30a.

From the foregoing description it can be seen how the invention fully achieves the set aim and objects and, in particular, it should be noted that the apparatus according to the invention is structurally very simple, in that the suction of the air from the expansion cavity is not done by way of a suction system integrated in the pressing surfaces of the press, as in the known art, but instead through the perimetric frame that laterally delimits the expansion cavity.

This fact, among other things, makes it possible to use the perimetric frame of the apparatus according to the invention in order to vacuum manufacture panels even using presses that originally were not made for this type of production, thus providing a "retrofitting" system for existing presses of the conventional type which makes it possible to convert them, effectively and very simply, to presses for vacuum foaming.

Another advantage of the invention which should be noted is that the use of the perimetric frame as the interface between the expansion cavity and the system that creates the vacuum makes it possible to use the entire surface area of the pressing surfaces, given that air suction holes are not necessary in the pressing surfaces.

All the characteristics, indicated above as advantageous, convenient or similar, may also be missing or be substituted by equivalent characteristics.

The individual characteristics set out in reference to general teachings or to specific embodiments may all be present in other embodiments or may substitute characteristics in such embodiments.

In practice the materials employed, provided they are compatible with the specific use, and the dimensions and shapes, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for manufacturing panels made of expanded plastic material which comprises at least one perimetric confinement frame (3) intended to be clamped between a pair of pressing surfaces (2a, 2b) of a press (2) in order to delimit laterally at least one expansion cavity (4) for an expanding mixture, wherein at least one portion of said perimetric frame (3) defines internally, along its extension, at least one air passage channel (5) that is connected to at least one air intake port (6), which is defined in the surface of said perimetric frame (3) that is directed toward the inside of said expansion cavity (4), and to at least one connection port (7), which is defined in the surface of said perimetric frame (3) that is directed toward the outside of said expansion cavity (4) and adapted to be connected to at least one air suction device (8).

2. The apparatus according to claim 1, **characterized in that** it comprises connection means (9) adapted to mutually connect portions of said at least one air passage duct (5) defined in contiguous sides of said perimetric frame (3).

3. The apparatus according to one or more of the preceding claims, **characterized in that** said perimetric frame (3) has a pair of head sides (3a) that are mutually connected by a pair of longitudinal sides (3b) that are longer than said head sides (3a), said at least one connection port (7) being defined at at least one of said head sides.

4. The apparatus according to one or more of the preceding claims, **characterized in that** along at least one of said longitudinal sides (3b) there is a plurality of intake ports (6) which are mutually spaced apart.

5. The apparatus according to one or more of the preceding claims, **characterized in that** said suction device (8) comprises a Venturi pump (11).

6. The apparatus according to one or more of the preceding claims, **characterized in that** said perimetric frame (3) comprises a plurality of profiled elements (18) that are mutually assembled, each profiled element defining axially a respective portion of said at least one air passage channel (5), at least one of said profiled elements (18) having said at least one connection port (7) and at least one of said profiled elements having at least one of said intake ports (6).

7. The apparatus according to one or more of the preceding claims, **characterized in that** said perimetric frame (3) is provided with at least one injection opening (30a) for the introduction of said expanding mixture into said expansion cavity (4).

8. The apparatus according to one or more of the preceding claims, **characterized in that** it comprises at least one internal frame segment (20), intended to be accommodated within said expansion chamber (4), substantially parallel to said head sides (3a), in a position that can be varied along the extension of said longitudinal sides (3b) as a function of the dimensions of the panels to be manufactured.

9. A method for manufacturing panels made of expanded plastic material, wherein it comprises the steps of:
- providing at least one perimetric confinement frame (3) adapted to delimit laterally an expansion cavity (4) for an expanding mixture, said perimetric frame (3) having at least one portion inside which there is at least one air passage channel (5) connected to at least one intake port, which is defined in the surface of said perimetric frame (3) that is directed toward said expansion cavity (4), and to at least one connection port (7) which is defined in the surface of said perimetric frame (3) that is directed toward the outside of said expansion cavity (4);
- arranging said perimetric frame (3) between a pair of mutually opposite pressing surfaces (2a, 2b) of a press (2);
- clamping said perimetric frame (3) between said pressing surfaces (2a, 2b);
- connecting said at least one connection port (7) to at least one air suction device (8);
- injecting an expanding mixture into said expansion cavity (4) through an injection opening (30a) defined in said perimetric frame (3);
- allowing said expanding mixture to expand in said expansion cavity (4), with said air suction device (8) activated in order to aspirate air from said expansion cavity (4) through said at least one intake port (6), so as to maintain an at least partial vacuum in said expansion cavity (4).

## Patentansprüche

1. Eine Vorrichtung zur Herstellung von Platten aus Schaumkunststoffmaterialien, die mindestens einen perimetrischen Einschlussrahmen (3) umfasst, der dazu bestimmt ist, zwischen einem Paar von Pressflächen (2a, 2b) einer Presse (2) geklemmt zu werden, um mindestens einen Expansionshohlraum (4) für eine schäumende Mischung seitlich zu begrenzen; wobei mindestens ein Teil des perimetrischen Rahmens (3) intern entlang seiner Ausdehnung mindestens einen Luftdurchlasskanal (5) bestimmt, welcher mit mindestens einer Lufteinlassöffnung (6) verbunden ist, die in der Oberfläche des perimetrischen Rahmens (3) bestimmt ist, die der Innenseite des Expansionshohlraums (4) zugewandt ist, und mit mindestens einer Anschlussöffnung (7), welche in der Oberfläche des perimetrischen Rahmens (3) bestimmt ist, die der Außenseite des Expansionshohlraums (4) zugewandt ist, und ausgebildet ist, um mit mindestens einer Luftansaugvorrichtung (8) verbunden zu werden.

2. Die Vorrichtung gemäß Anspruch 1, **dadurch gekennzeichnet, dass** sie Verbindungsmittel (9) umfasst, die ausgebildet sind, um Abschnitte des mindestens einen Luftdurchlasskanals (5), die in benachbarten Seiten des perimetrischen Rahmens (3) bestimmt sind, miteinander zu verbinden.

3. Die Vorrichtung gemäß einem oder mehreren der obigen Ansprüche, **dadurch gekennzeichnet, dass** der perimetrische Rahmen (3) ein Paar von Kopfseiten (3a) hat, die miteinander durch ein Paar von Längsseiten (3b) verbunden sind, welche länger sind als die Kopfseiten (3a), wobei die mindestens eine Anschlussöffnung (7) an mindestens einer der Kopfseiten bestimmt ist.

4. Die Vorrichtung gemäß einem oder mehreren der obigen Ansprüche, **dadurch gekennzeichnet, dass** sich entlang mindestens einer der Längsseiten (3b) eine Vielzahl von Einlassöffnungen (6) befindet, die voneinander beabstandet sind.

5. Die Vorrichtung gemäß einem oder mehreren der obigen Ansprüche, **dadurch gekennzeichnet, dass** die Ansaugvorrichtung (8) eine Venturipumpe (11) umfasst.

6. Die Vorrichtung gemäß einem oder mehreren der obigen Ansprüche, **dadurch gekennzeichnet, dass** der perimetrische Rahmen (3) eine Vielzahl profilierter Elemente (18) umfasst, die zusammenmontiert sind, wobei jedes profilierte Element axial einen entsprechenden Abschnitt des mindestens einen Luftdurchlasskanals (5) bestimmt, wobei mindestens eines der profilierten Elemente (18) die mindestens eine Anschlussöffnung (7) hat und mindestens eines der profilierten Elemente mindestens eine der Einlassöffnungen (6) hat.

7. Die Vorrichtung gemäß einem oder mehreren der obigen Ansprüche, **dadurch gekennzeichnet, dass** der perimetrische Rahmen (3) mit mindestens einer Einspritzöffnung (30a) zum Einspritzen der schäumenden Mischung in den Expansionshohlraum (4) versehen ist.

8. Die Vorrichtung gemäß einem oder mehreren der obigen Ansprüche, **dadurch gekennzeichnet, dass** sie mindestens ein internes Rahmensegment (20) umfasst, das dazu bestimmt ist, in die Expansionskammer (4) aufgenommen zu werden, im Wesentlichen parallel zu den Kopfseiten (3a), in einer Position, die entlang der Ausdehnung der Längsseiten (3b) in Abhängigkeit von den Maßen der herzustellenden Platten verändert werden kann.

9. Ein Verfahren zur Herstellung von Platten aus Schaumkunststoffmaterial, das folgende Schritte umfasst:
- das Bereitstellen mindestens eines perimetrischen Einschlussrahmens (3), der ausgebildet ist, um seitlich einen Expansionshohlraum (4) für eine schäumende Mischung zu begrenzen, wobei der perimetrische Rahmen (3) mindestens einen Abschnitt hat, in dem sich mindestens ein Luftdurchlasskanal (5) befindet, der mit mindestens einer Einlassöffnung verbunden ist, welche in der Oberfläche des perimetrischen Rahmens (3) bestimmt ist, die dem Expansionshohlraum (4) zugewandt ist, und mit mindestens einer Anschlussöffnung (7), welche in der Oberfläche des perimetrischen Rahmens (3) bestimmt ist, die der Außenseite des Expansionshohlraums (4) zugewandt ist;
- das Anordnen des perimetrischen Rahmens (3) zwischen einem Paar einander gegenüberliegender Pressflächen (2a, 2b) einer Presse (2);
- das Klemmen des perimetrischen Rahmens (3) zwischen den Pressflächen (2a, 2b) ;
- das Anschließen der mindestens einen Anschlussöffnung (7) an mindestens eine Luftansaugvorrichtung (8);
- das Einspritzen einer schäumenden Mischung in den Expansionshohlraum (4) durch eine in dem perimetrischen Rahmen (3) bestimmte Einspritzöffnung (30a) ;
- das Schäumenlassen der schäumenden Mischung in dem Expansionshohlraum (4), wobei die Luftansaugvorrichtung (8) aktiviert ist, um Luft aus dem Expansionshohlraum (4) durch die mindestens eine Einlassöffnung (6) anzusaugen und so zumindest ein Teilvakuum in dem Expansionshohlraum (4) aufrechtzuerhalten.

## Revendications

1. Appareil pour fabriquer des panneaux en matière plastique expansée qui comporte au moins un châssis de confinement périmétrique (3) destiné à être serré entre une paire de surfaces de pression (2a, 2b) d'une presse (2) afin de délimiter latéralement au moins une cavité d'expansion (4) pour un mélange en expansion,
dans lequel au moins une partie dudit châssis périmétrique (3) définit intérieurement, le long de son extension, au moins un conduit de passage d'air (5) qui est raccordé à au moins un port d'admission d'air (6), qui est défini dans la surface dudit châssis périmétrique (3) qui est dirigée vers l'intérieur de ladite cavité d'expansion (4), et à au moins un port de raccordement (7), qui est défini dans la surface dudit châssis périmétrique (3) qui est dirigée vers l'extérieur de ladite cavité d'expansion (4), et adapté pour être raccordé à au moins un dispositif d'aspiration d'air (8).

2. Appareil selon la revendication 1, **caractérisé en ce qu'**il comporte des moyens de liaison (9) adaptés pour relier mutuellement des parties dudit au moins un conduit de passage d'air (5) défini dans des côtés contigus dudit châssis périmétrique (3).

3. Appareil selon une ou plusieurs des revendications précédentes, **caractérisé en ce que** le châssis périmétrique (3) a une paire de côtés de tête (3a) qui sont mutuellement reliés par une paire de côtés longitudinaux (3b) qui sont plus longs que lesdits côtés de tête (3a), ledit au moins un port de raccordement (7) étant défini sur au moins un desdits côtés de tête.

4. Appareil selon une ou plusieurs des revendications précédentes, **caractérisé en ce que** le long d'au moins un desdits côtés longitudinaux (3b), il y a une pluralité de ports d'admission (6) qui sont mutuellement espacés.

5. Appareil selon une ou plusieurs des revendications précédentes, **caractérisé en ce que** ledit dispositif d'aspiration (8) comporte une pompe à Venturi (11).

6. Appareil selon une ou plusieurs des revendications précédentes, **caractérisé en ce que** ledit châssis périmétrique (3) comporte une pluralité d'éléments profilés (18) qui sont mutuellement assemblés, chaque élément profilé définissant axialement une partie respective dudit au moins un conduit de passage d'air (5), au moins un desdits éléments profilés (18) ayant ledit au moins un port de raccordement (7) et au moins un desdits éléments profilés ayant au moins un desdits ports d'admission (6).

7. Appareil selon une ou plusieurs des revendications précédentes, **caractérisé en ce que** ledit châssis périmétrique (3) est pourvu d'au moins un orifice d'injection (30a) pour l'introduction dudit mélange en expansion dans ladite cavité d'expansion (4).

8. Appareil selon une ou plusieurs des revendications précédentes, **caractérisé en ce qu'**il comporte au moins un segment de châssis interne (20), destiné à être reçu à l'intérieur de ladite cavité d'expansion (4), sensiblement parallèle auxdits côtés de tête (3a), dans une position qui peut varier le long de l'extension desdits côtés longitudinaux (3b) en fonction des dimensions des panneaux à fabriquer.

9. Procédé pour fabriquer des panneaux en matière plastique expansée, comportant les étapes consistant à :
- fournir au moins un châssis de confinement périmétrique (3) adapté pour délimiter latéralement une cavité d'expansion (4) pour un mélange en expansion, ledit châssis périmétrique (3) ayant au moins une partie à l'intérieur de laquelle il y a au moins un conduit de passage d'air (5) raccordé à au moins un port d'admission, qui est défini dans la surface dudit châssis périmétrique (3) qui est dirigée vers ladite cavité d'expansion (4), et à au moins un port de raccordement (7) qui est défini dans la surface dudit châssis périmétrique (3) qui est dirigée vers l'extérieur de ladite cavité d'expansion (4),
- agencer ledit châssis périmétrique (3) entre une paire de surfaces de pression (2a, 2b) mutuellement opposées d'une presse (2),
- serrer ledit châssis périmétrique (3) entre lesdites surfaces de pression (2a, 2b),
- raccorder ledit au moins un port de raccordement (7) à au moins un dispositif d'aspiration d'air (8),
- injecter un mélange en expansion dans ladite cavité d'expansion (4) à travers un orifice d'injection (30a) défini dans ledit châssis périmétrique (3),
- permettre audit mélange en expansion de s'expanser dans ladite cavité d'expansion (4), ledit dispositif d'aspiration d'air (8) étant activé afin d'aspirer de l'air à partir de ladite cavité d'expansion (4) à travers ledit au moins un port d'admission (6), de manière à maintenir un vide au moins partiel dans ladite cavité d'expansion (4).
